# EUROPÄISCHE PATENTSCHRIFT

(11) **EP 3 631 179 B1**
(45) Veröffentlichungstag und Bekanntmachung des Hinweises auf die Patenterteilung: **17.03.2021**
(21) Anmeldenummer: 18718128.4
(22) Anmeldetag: 11.04.2018
(51) Int. Cl.: F01N 3/20

(54) **FLUIDVENTIL**
FLUID VALVE
SOUPAPE À FLUIDE

(30) Priorität: 01.06.2017 DE 102017209255
(43) Veröffentlichungstag der Anmeldung: 08.04.2020
(73) Patentinhaber: Robert Bosch GmbH, 70442 Stuttgart (DE)
(72) Erfinder: ORASCH, Stefan, 71686 Remseck (DE); PICKL, Florian, 70499 Stuttgart (DE)
(86) Internationale Anmeldenummer: PCT/EP2018/059253
(87) Internationale Veröffentlichungsnummer: WO 2018/219540

(56) Entgegenhaltungen:
- EP-A2- 2 535 623
- DE-A1-102008 039 420
- DE-A1-102010 039 103
- FR-A1- 2 286 995

## Beschreibung

Die Erfindung betrifft ein Fluidventil, insbesondere ein 4/2-Wege-Fluidventil zum Einsatz in Abgas-Reduktionssystemen, das eine kompakte Bauform und einen geringen hydraulischen Widerstand hat.

### Stand der Technik

Um Stickoxide (NOₓ) im Abgasstrom eines Verbrennungsmotors, insbesondere ein Dieselmotors, zu reduzieren, wird im sogenannten SCR-Verfahren ein flüssiges Reduktionsmittel in Form einer Harnstoffwasserlösung ("AdBlue"®) in den Abgastrakt des Verbrennungsmotors eingespritzt.

Harnstoffwasserlösung gefriert bei ca. -12 °C. Um Beschädigungen des Einspritzsystems durch die Volumenausdehnung gefrierender Harnstoffwasserlösung zu vermeiden, wird das Reduktionsmittel aus dem Einspritzsystem in einen Tank zurückgesaugt, sobald der Verbrennungsmotor abgeschaltet wird.

Durch den Einsatz eines 4/2-Wegeventils kann die gleiche Fluid-Fördervorrichtung (Pumpe) sowohl zum Einspritzen als auch zum Rücksaugen des Reduktionsmittels verwendet werden, ohne dass die Förderrichtung der Fluid-Fördervorrichtung geändert werden muss In diesem Zusammenhang wird auf die Dokumente FR2286995A1 und EP2535623A2 hingewiesen.

### Offenbarung der Erfindung:

Es ist eine Aufgabe der Erfindung ein 4/2-Wege-Fluidventil zur Verfügung zu stellen, das einen kompakten Aufbau und einen möglichst geringen hydraulischen Widerstand hat.

Gemäß einem Ausführungsbeispiel der Erfindung umfasst ein 4/2-Wege-Fluidventil wenigstens zwei hohle Verbindungskammern, in die jeweils ein erster Fluidkanal und ein zweiter Fluidkanal münden. In jeder Verbindungskammer ist eine elastische Membran vorgesehen, die einen ersten Bereich der jeweiligen Verbindungskammer, in den der erste und der zweite Fluidkanal münden, von einem zweiten Bereich der Verbindungskammer trennt. Im zweiten Bereich der jeweiligen Verbindungskammer ist ein abgeschlossenes Luftvolumen ausgebildet.

Durch die elastische Membran im Verbindungsraum wird ein scharfes Umlenken der Fluidströmung zwischen dem ersten und dem zweiten Fluidkanal vermieden. Dadurch wird der hydraulische Widerstand des Fluidventils verringert, so dass eine Fluid-Fördervorrichtung (Fluidpumpe), die vorgesehen ist, Fluid durch das Fluidventil zu fordern, sehr effizient betrieben kann.

Die elastische Membran ist in beide Richtungen auslenkbar und stellt daher bei einer pulsierenden hydraulischen Belastung einen Druckschwankungen dämpfenden Druckspeicher zur Verfügung.

Das Luftvolumen stellt ein elastisches Ausgleichsvolumen zur Verfügung, das einen Volumenausgleich ermöglicht und einen übermäßigen Druckanstieg verhindert, falls trotz des Zurücksaugens Fluidreste im Ventil verbleiben und dort gefrieren sollten.

In einer Ausführungsform dichtet die elastische Membran den erste Bereich und den zweiten Bereich fluiddicht voneinander ab. So verhindert die elastische Membran, dass sich in einem Bereich des Verbindungsraums, insbesondere in einem unteren Bereich, eine Totraumzone ausbildet, in der sich Fluid, das nicht in den Tank zurück gesaugt worden ist, sammelt und gefriert.

In einer Ausführungsform münden der erste und der zweite Strömungskanal in einem Winkel von mehr als 0°, insbesondere in einem Winkel von mehr als 30°, zueinander in die Verbindungskammer.

In einer Ausführungsform münden der erste und der zweite Strömungskanal in einem Winkel von weniger als 90°, insbesondere in einem Winkel von weniger als 60°, zueinander in die Verbindungskammer.

Derart angeordnete Strömungskanäle ermöglichen einen besonders kompakten Aufbau des Fluidventils. Durch die elastische Membran wird verhindert, dass die zwischen den beiden Strömungskanälen fließende Strömung abreißt.

Ausführungsbeispiele der Erfindung umfassen auch ein System zum Einspritzen eines fluiden Reduktionsmittels in den Abgasstrang eines Verbrennungsmotors mit einer Fluid-Fördervorrichtung, mit einer an dem Abgasstrang angeordneten Einspritzvorrichtung und mit einem 4/2-Wege-Fluidventil nach einem Ausführungsbeispiel der Erfindung. Das Fluidventil ist in einer Fluidförderleitung zwischen der Fluid-Fördervorrichtung und der Einspritzvorrichtung angeordnet.

In einer Ausführungsform ermöglicht das 4/2-Wege-Fluidventil, die Förderrichtung, in der das Fluid gefördert wird, zwischen einer Einspritzrichtung, in der Fluid zur Einspritzvorrichtung gefördert wird, und einer Rücksaugrichtung, in der Fluid aus der Einspritzvorrichtung abgesaugt wird, umzuschalten, ohne die Förderrichtung der Fluid-Fördervorrichtung selbst zu verändern. So kann eine Fluid-Fördervorrichtung zum Einsatz kommen, die nur in einer Richtung betreibbar ist oder die nur beim Betrieb in einer Richtung die gewünschte Effizienz aufweist.

Auf diese Weise kann ein System zum Einspritzen eines fluiden Reduktionsmittels in den Abgasstrang eines Verbrennungsmotors zur Verfügung gestellt werden, das eine effektive Förderung und Rückförderung eines fluiden Reduktionsmittels ermöglicht und das darüber hinaus einen kompakten Aufbau mit einem geringen Raumbedarf hat.

### Kurze Beschreibung der Figuren:

Ausführungsbeispiele der Erfindung werden im Folgenden unter Bezugnahme auf die beigefügten Figuren beschrieben.
Figur 1 zeigt eine schematische Ansicht einer Einrichtung zum Einspritzen eines in einem Tank gespeicherten Reduktionsmittels in einen Abgasstrang eines Verbrennungsmotors;
Figur 2 zeigt eine perspektivische Ansicht des inneren Aufbaus eines 4/2-Wegeventils.
Figur 3 zeigt eine schematische Schnittansicht eines Ausschnitts des in Figur 2 gezeigten 4/2-Wegeventils.
Figur 4 zeigt eine Verbindungskammer, die gemäß einem Ausführungsbeispiel der Erfindung ausgebildet ist.

### Figurenbeschreibung

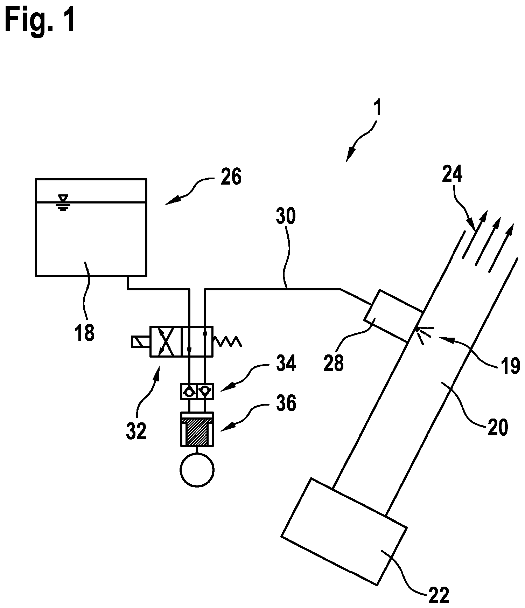

Figur 1 zeigt eine schematische Ansicht eines Systems 1 zum Einspritzen eines in einem Tank 36 gespeicherten fluiden Reduktionsmittels 18 (Fluid), insbesondere einer wässrigen Harnstofflösung ("AdBlue"®), in einen Abgasstrang 20 eines Verbrennungsmotors 22, insbesondere eines Dieselmotors 22.

Im (Einspritz-)Betrieb der Vorrichtung wird das Fluid 18 aus dem Tank 26 entnommen und von einer Fluid-Fördervorrichtung/Förderpumpe 36 unter erhöhtem Druck durch eine Fluid-Förderleitung 30 einer am Abgasstrang 20 positionierten Einspritzvorrichtung 28 zugeführt. Die Einspritzvorrichtung 28 spritzt das ihr zugeführte Fluid 18 als Spray 19 in den Abgasstrang 20 ein, wo es sich mit den durch den Abgasstrang 20 strömenden Verbrennungsgasen 24 des Verbrennungsmotors 22 vermischt.

Um ein Einfrieren des Fluids 18 in der Einspritzvorrichtung 28 und der Fluid-Förderleitung 30 zu verhindern, wird das Fluid 18 nach dem Abschalten des Verbrennungsmotors 22 aus der Einspritzvorrichtung 28 und der Fluid-Förderleitung 30 abgesaugt und zurück in den Tank 26 gefördert, bevor das System 1 deaktiviert wird.

Dazu ist in der Fluid-Förderleitung 30 ein Fluidventil 32 vorgesehen. Das Fluidventil 32 ist als 4/2-Wege-Ventil ausgebildet, das es ermöglicht, die Flussrichtung des Fluids 18 in der Fluid-Förderleitung 30 umzukehren, ohne die Förderrichtung der Förderpumpe 36 umzudrehen. Zwischen dem 4/2-Wege-Ventil 32 und der Förderpumpe 36 sind zusätzlich Ein-Wege-Ventile 34 vorgesehen, die in der Förderrichtung der Förderpumpe 36 öffnen und einen Fluidfluss entgegen der Förderrichtung der Förderpumpe 36 blockieren.

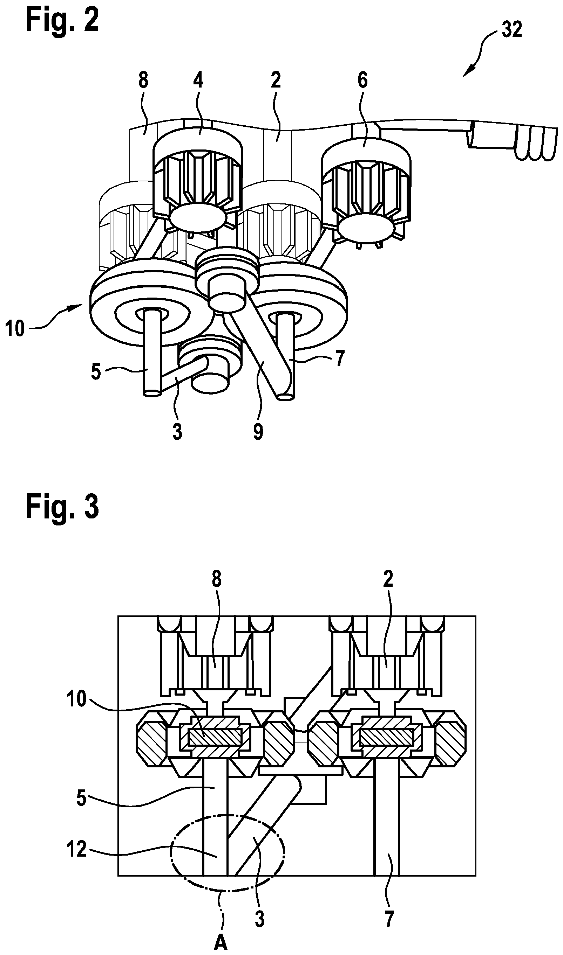

Figur 2 eine perspektivische Ansicht des inneren Aufbaus eines 4/2-Wegeventils 32 und Figur 3 zeigt eine schematische Schnittansicht davon.

Das 4/2-Wegeventil 32 weist vier Zu- und Ableitungen 2, 4, 6, 8, auf, die mit entsprechenden (nicht gezeigten) Anschlüssen des 4/2-Wegeventils 32 verbunden sind. Durch Verschieben einer beweglichen Umschaltgabel 10 kann zwischen den beiden Schaltzuständen des 4/2-Wegeventils 32 umgeschaltet werden.

In einem ersten Schaltzustand (Einspritzbetrieb) ist die erste Fluidleitung 2 über eine erste als Fluidkanal ausgebildete Verbindungsleitung 3 und eine zweite als Fluidkanal ausgebildete Verbindungsleitung 5 mit der Fluidleitung 4. Die dritte Fluidleitung 4 ist über eine dritte als Fluidkanal ausgebildete Verbindungsleitung 7 und eine vierte als Fluidkanal ausgebildete Verbindungsleitung 9 mit der dritten Fluidleitung 8 verbunden.

In einem zweiten Schaltzustand (Rückförderungsbetrieb) ist die erste Fluidleitung 2 mit der dritten Fluidleitung 6 verbunden und die zweite Fluidleitung 6 mit der vierten Fluidleitung 8 verbunden.

Um einen kompakten Aufbau des 4/2-Wegeventils 32 zu ermöglichen, treffen die erste Verbindungsleitung 3 und die zweite Verbindungsleitung 5 in einem spitzen Winkel α, d.h. einem Winkel 0° < α < 90° aufeinander (siehe Figur 3). Dies gilt ebenso für die dritte Verbindungsleitung 7 und die vierte Verbindungsleitung 9 (siehe Figur 2).

Die dadurch verursachte scharfe Umlenkung der Fluidströmung um mehr als 180° ist aus Sicht der Strömungsdynamik nicht optimal. Insbesondere kann es zu aufgrund der scharfen Umlenkung zu einem Strömungsabriss kommen, was einen erhöhten hydraulischen Widerstand zur Folge hat, der ggf. durch eine höher Leistung der Fluid-Fördervorrichtung 36 ausgeglichen werden muss.

Die sich aus dem scharfen Umlenken ergebenden negativen Effekte werden durch eine erfindungsgemäße Ausgestaltung der Verbindungsstelle 12 zwischen den Verbindungsleitungen 3, 5, 7, 9 reduziert.

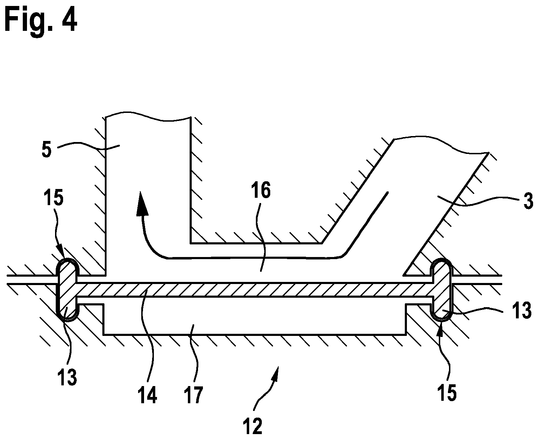

Figur 4 zeigt einen vergrößerten Ausschnitt des Bereichs A aus Figur 2, der erfindungsgemäß ausgebildet ist.

An der Stelle, an der die erste Verbindungsleitung 3 auf die zweite Verbindungsleitung 5 trifft, ein Verbindungsraum 12 ausgebildet. Die erste Verbindungsleitung 3 und die zweite Verbindungsleitung 5 münden beide in einen ersten Bereich 16 des Verbindungsraums, der in der Figur 4 oben dargestellt ist. Der Winkel zwischen der ersten Verbindungsleitung 3 und der zweiten Verbindungsleitung 5 beträgt mehr als 0° und weniger als 90°; insbesondere mehr als 30° und weniger als 60°, beispielsweise 45°.

In dem Verbindungsraum 12 ist eine elastische Membran 14 angeordnet, die den ersten Bereich 16 des Verbindungsraums 12, in den die erste Verbindungsleitung 3 und die zweite Verbindungsleitung 5 münden, von einem zweiten Bereich 17, der in der Figur 4 unten dargestellt ist, trennt.

Die im Verbindungsraum 12 vorgesehene elastische Membran 14 verhindert ein scharfes Umlenken der Fluidströmung. Dadurch wird der hydraulische Widerstand des Fluidventils 32 deutlich reduziert.

Die elastische Membran 14 dichtet den erste Bereich 16 und den zweiten Bereich 17 fluiddicht voneinander ab.

Die elastische Membran 14 verhindert so, dass im unteren Bereich des Verbindungsraums 12 eine sogenannten Totraumszone entsteht, in der sich Fluid 18, das nicht zurückgesaugt worden ist, sammeln und gefrieren könnte.

Darüber hinaus wird im zweiten Bereich 17 des Verbindungsraums 12 durch die Membran 14 ein elastisches Luftvolumen eingeschlossen, das ein Ausgleichsvolumen zur Verfügung stellt, falls trotz des Zurücksaugens Fluid 18 im Fluidventil 32 verbleiben und dort gefrieren sollte.

Die elastische Membran 14 ist in beide Richtungen auslenkbar und stellt daher bei einer pulsierenden hydraulischen Belastung einen Druckschwankungen dämpfenden Druckspeicher zur Verfügung.

Die elastische Membran 14 weist einen verdickten Rand 13 auf, der es ermöglicht, die Membran 14 in einer passenden Ausnehmung 15, die im Gehäuse des Fluidventils 32 ausgebildet ist, zu fixieren.

Die elastische Membran 14 ist in beide Richtungen auslenkbar und stellt daher bei einer pulsierenden hydraulischen Belastung einen Druckschwankungen dämpfenden Druckspeicher zur Verfügung.

Die elastische Membran 14 weist einen verdickten Rand 13 auf, der es ermöglicht, die Membran 14 in einer passenden Ausnehmung 15, die im Gehäuse des Fluidventils 32 ausgebildet ist, zu fixieren.

## Patentansprüche

1. 4/2-Wege-Fluidventil (32) mit wenigstens zwei Verbindungskammern (12), in die jeweils ein erster Fluidkanal (3) und ein zweiter Fluidkanal (5) münden, **dadurch gekennzeichnet, dass** in jeder der Verbindungskammern (12) eine elastische Membran (14) vorhanden ist, die einen ersten Bereich (16) der jeweiligen Verbindungskammer (12), in den der erste und der zweite Fluidkanal (3, 5) münden, fluiddicht von einem zweiten Bereich (17) der Verbindungskammer (12) trennt und wobei in dem zweiten Bereich (17) der Verbindungskammer (12) ein abgeschlossenes Luftvolumen ausgebildet ist.

2. 4/2-Wege-Fluidventil (32) nach Anspruch 1, wobei der erste und der zweite Fluidkanal (3, 5) in einem Winkel (α) von mehr als 0°, insbesondere in einem Winkel (α) von mehr als 30°, zueinander in die Verbindungskammer (12) münden.

3. 4/2-Wege-Fluidventil (32) nach Anspruch 1 oder 2, wobei der erste und der zweite Fluidkanal (3, 5) in einem Winkel (α) von weniger als 90°, insbesondere in einem Winkel (α) von weniger als 60°, zueinander in die Verbindungskammer (12) münden.

4. System (1) zum Einspritzen eines fluiden Reduktionsmittels (18) in den Abgasstrang (20) eines Verbrennungsmotors (22) mit einer Fluid-Fördervorrichtung (36), einer an dem Abgasstrang (20) angeordneten Einspritzvorrichtung (28) und einem 4/2-Wege-Fluidventil (32) nach einem der vorangehenden Ansprüche, das zwischen der Fördervorrichtung (36) und der Einspritzvorrichtung (28) angeordnet ist.

5. System (1) nach Anspruch 4, wobei das 4/2-Wege-Fluidventil (32) ausgebildet ist, die Förderrichtung, in der das Fluid gefördert wird, zwischen einer Einspritzrichtung, in der Fluid zur Einspritzvorrichtung (28) gefördert wird, und einer Rücksaugrichtung, in der Fluid aus der Einspritzvorrichtung (28) abgesaugt wird, umzuschalten.

## Claims

1. 4/2 directional fluid valve (32) with at least two connecting chambers (12) which open into in each case one first fluid channel (3) and one second fluid channel (5), **characterized in that**, in each of the connecting chambers (12), there is provided an elastic diaphragm (14) which separates a first region (16) of the respective connecting chamber (12), into which the first and the second fluid channel (3, 5) open, in fluid-tight fashion from a second region (17) of the connecting chamber (12), and wherein a closed-off air volume is formed in the second region (17) of the connecting chamber (12).

2. 4/2 directional fluid valve (32) according to Claim 1, wherein the first and the second fluid channel (3, 5) open into the connecting chamber (12) at an angle (α) of greater than 0°, in particular at an angle (α) of greater than 30°, with respect to one another.

3. 4/2 directional fluid valve (32) according to Claim 1 or 2, wherein the first and the second fluid channel (3, 5) open into the connecting chamber (12) at an angle (α) of less than 90°, in particular at an angle (α) of less than 60°, with respect to one another.

4. System (1) for injecting a fluid reducing agent (18) into the exhaust section (20) of an internal combustion engine (22), having a fluid conveying device (36), having an injection device (28) which is arranged on the exhaust section (20), and having a 4/2 directional fluid valve (32) according to any of the preceding claims which is arranged between the conveying device (36) and the injection device (28).

5. System (1) according to Claim 4, wherein the 4/2 directional fluid valve (32) is designed to switch the conveying direction in which the fluid is conveyed between an injection direction, in which the fluid is conveyed to the injection device (28), and a back-suction direction, in which the fluid is suctioned out of the injection device (28).

## Revendications

1. Soupape de fluide à 4/2 voies (32), comprenant au moins deux chambres de connexion (12) dans lesquelles débouchent à chaque fois un premier canal de fluide (3) et un deuxième canal de fluide (5),
**caractérisée en ce qu'**une membrane élastique (14) est prévue dans chacune des chambres de connexion (12), laquelle sépare une première région (16) de la chambre de connexion respective (12), dans laquelle débouchent le premier et le deuxième canal de fluide (3, 5), de manière étanche aux fluides d'une deuxième région (17) de la chambre de connexion (12) et un volume d'air fermé étant réalisé dans la deuxième région (17) de la chambre de connexion (12).

2. Soupape de fluide à 4/2 voies (32) selon la revendication 1, dans laquelle le premier et le deuxième canal de fluide (3, 5) débouchent dans la chambre de connexion (12) suivant un angle (α) l'un par rapport à l'autre supérieur à 0°, en particulier suivant un angle (α) supérieur à 30°.

3. Soupape de fluide à 4/2 voies (32) selon la revendication 1 ou 2, dans laquelle le premier et le deuxième canal de fluide (3, 5) débouchent dans la chambre de connexion (12) suivant un angle (α) l'un par rapport à l'autre inférieur à 90°, en particulier suivant un angle (α) inférieur à 60°.

4. Système (1) pour l'injection d'un agent réducteur fluide (18) dans la ligne d'échappement (20) d'un moteur à combustion interne (22), comprenant un dispositif de transport de fluide (36), un dispositif d'injection (28) disposé au niveau de la ligne d'échappement (20) et une soupape de fluide à 4/2 voies (32) selon l'une quelconque des revendications précédentes, qui est disposée entre le dispositif de transport (36) et le dispositif d'injection (28).

5. Système (1) selon la revendication 4, dans lequel la soupape de fluide à 4/2 voies (32) est réalisée de manière à commuter la direction de transport dans laquelle le fluide est transporté entre une direction d'injection dans laquelle le fluide est transporté au dispositif d'injection (28), et une direction de réaspiration dans laquelle le fluide est aspiré depuis le dispositif d'injection (28).
